(19)

Europäisches
Patentamt

European
Patent Office

Office européen
des brevets

(11) **EP 3 524 960 A1**

(12) **EUROPEAN PATENT APPLICATION**
published in accordance with Art. 153(4) EPC

(43) Date of publication:
**14.08.2019 Bulletin 2019/33**

(21) Application number: **17858509.7**

(22) Date of filing: **05.10.2017**

(51) Int Cl.:
***G01N 3/00*** (2006.01)   ***G06F 17/50*** (2006.01)

(86) International application number:
**PCT/JP2017/036387**

(87) International publication number:
**WO 2018/066673 (12.04.2018 Gazette 2018/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.10.2016 JP 2016197433**

(71) Applicant: **Nippon Steel & Sumitomo Metal
Corporation
Tokyo 100-8071 (JP)**

(72) Inventors:
• **AITOH, Takahiro
Tokyo 100-8071 (JP)**
• **NITTA, Jun
Tokyo 100-8071 (JP)**
• **KASEDA, Yoshiyuki
Tokyo 100-8071 (JP)**

(74) Representative: **Vossius & Partner
Patentanwälte Rechtsanwälte mbB
Siebertstrasse 3
81675 München (DE)**

(54) **FRACTURE DETERMINATION DEVICE, FRACTURE DETERMINATION PROGRAM, AND METHOD THEREOF**

(57)    A fracture determination device is provided which can predict fracture in an ultra-hard steel material. This fracture determination device 1 is provided with: a reference forming limit value generation unit 22 which, on the basis of reference forming limit value information, generates a reference forming limit value for a reference element size, which is the element size used as a reference; a target forming limit value generation unit 23 which uses the tensile strength of the steel material to change the reference forming limit value, predict the forming limit value for the element size and generate a target forming limit value; an analysis running unit 24 which runs a deformation analysis using input information and which outputs deformation information including the strain of each of the elements; a principal strain determination unit 25 which determines the maximum principal strain and the minimum principal strain of each of the elements included in the deformation information; and a fracture determination unit 26 which, on the basis of the determined maximum principal strain and minimum principal strain of each of the elements and the target forming limit value, determines whether each element in the analysis model will fracture.

FIG. 3

**Description**

FIELD

The present invention relates to a fracture determination device, a fracture determination program, and a method thereof.

BACKGROUND

In recent years, application of a high-strength steel sheet to an automobile body has been spreading rapidly, due to a demand in safety from collision and a reduction in weight. The high-strength steel sheet used for an automobile body may increase absorption energy by increasing the reaction force at the time of collision without increasing sheet thickness. However, as the strength of a steel sheet becomes higher, the ductility of the steel sheet decreases, and therefore the steel sheet will fracture at the time of press molding and at the time of collision deformation of a vehicle, such as an automobile. In order to determine the state of a steel sheet at the time of press molding and at the time of collision deformation, a molding analysis by a finite element method (FEM) and a crash analysis are performed and the needs for fracture determination with a high accuracy in those analyses have increased.

In order to evaluate a degree of margin for fracture at the time of moldability evaluation and collision performance evaluation, it is known to use a forming limit diagram (FLD) that gives a fracture limit by using a relationship between maximum principal strain and minimum principal strain (for example, see Patent Literatures 1 and 2). It is determined whether each element will fracture, by comparing the maximum principal strain and the minimum principal strain of the element obtained by simulating the press molding and the collision deformation by the FEM, and the forming limit line shown in a forming limit line diagram.

However, the strain obtained by the analysis by the FEM has such a problem that the fracture determination results differ depending on the magnitude of the element size, since the strain depends on the element size (gauge length, mesh size) of an analysis model, which is one of the analysis conditions of the analysis.

It is known that whether an element will fracture is determined by performing arithmetic operation to obtain fracture limit strain in accordance with the element size and by using the fracture limit strain obtained by the arithmetic operation when performing the press molding analysis by the FEM (for example, see Patent Literature 3). By the fracture determination method described in Patent Literature 3, fracture of a steel sheet in accordance with the element size may be predicted when performing press molding of a steel sheet whose strength is comparatively low, such as a steel sheet whose grade of tensile strength is 270 MPa and a steel sheet whose grade of tensile strength is 440 MPa.

[CITATION LIST]

[PATENT LITERATURE]

[PTL 1] Japanese Patent Laid-Open No. 2000-107818
[PTL 2] Japanese Patent Laid-Open No. 2009-61477
[PTL 3] Japanese Patent Laid-Open No. 2011-147949

SUMMARY

[TECHNICAL PROBLEM]

In recent years, a steel sheet having an ultra-high strength whose tensile strength is 980 MPa or more, also called an ultra-high tensile steel, has been developed. With the fracture determination method described in Patent Literature 3, for a steel material whose strength is comparatively low, such as a steel sheet whose grade of tensile strength is 270 MPa and a steel sheet whose grade of tensile strength is 440 MPa, fracture in accordance with the element size may be appropriately predict, but fracture in accordance with the element size is not appropriately predicted for a steel material having an ultra-high strength whose tensile strength is 980 MPa or more.

An object of the present invention is to provide a fracture determination device capable of appropriately predicting fracture in accordance with the element size of a steel material also including an ultra-high strength steel whose tensile strength is 980 MPa or more.

[SOLUTION TO PROBLEM]

The gist of the present invention which solves such problems is a fracture determination device, a fracture determination program, and a fracture determination method, to be described below.

(1) A fracture determination device including:

a storage unit which stores element input information indicating material property and sheet thickness of a steel material and an element size in an analysis model used for a deformation analysis of the steel material by a finite element method, and reference forming limit value information indicating a reference forming limit value indicating a forming limit value in a reference element size, which is the element size used as a reference;

a reference forming limit value generation unit which generates the reference forming limit value in accordance with the material property and the sheet thickness included in the input information on the basis of the reference forming limit value information;

a target forming limit value generation unit which uses tensile strength of the steel material to change the reference forming limit value, predict a forming limit value in the element size, and generate a target forming limit value;

an analysis running unit which runs the deformation analysis by using the input information and outputs deformation information including strain of each element;

a principal strain determination unit which determines principal strain of each element included in the deformation information; and

a fracture determination unit which determines whether each element in the analysis model will fracture on the basis of maximum principal strain and minimum principal strain of each element for which the principal strain is determined and a target forming limit line specified by the target forming limit value.

(2) The fracture determination device according to (1), wherein
the target forming limit value generation unit predicts the forming limit value by using the element size and a first coefficient obtained from tensile strength of the steel material.

(3) The fracture determination device according to (2), wherein
the target forming limit value generation unit predicts maximum principal strain in the element size by using the first coefficient, a second coefficient including maximum principal strain in the reference element size and the first coefficient, and the element size.

(4) The fracture determination device according to (3), wherein
the second coefficient is a function of maximum principal strain in the reference element size and the first coefficient.

(5) The fracture determination device according to (4), wherein
the second coefficient is in proportion to a logarithm of a value obtained by dividing maximum principal strain in the reference element size by the first coefficient.

(6) The fracture determination device according to any one of (2) to (5), wherein
the target forming limit value generation unit predicts maximum principal strain in the element size by using a product of the first coefficient and an arithmetic operation result of power arithmetic operation in which the second coefficient is taken to be an exponent and the element size is taken to be a base.

(7) The fracture determination device according to (1), wherein
the target forming limit value generation unit predicts the forming limit value by using the element size and a second coefficient obtained from tensile strength of the steel material.

(8) The fracture determination device according to (7), wherein
the second coefficient is a function of maximum principal strain in the reference element size and the first coefficient.

(9) The fracture determination device according to (8), wherein
the second coefficient is in proportion to a logarithm of a value obtained by dividing maximum principal strain in the reference element size by the fist coefficient.

(10) The fracture determination device according to (1), wherein
the target forming limit value generation unit generates the target forming limit value by using a forming limit value prediction expression, which is a function of the element size and tensile strength of the steel material,
the forming limit value prediction expression is, in a case where $\rho$ is a strain ratio, M is an element size indicating a size of an element in an analysis model used in an analysis by the FEM, $\varepsilon_1$ is maximum principal strain in an element size M, and $\varepsilon_2$ is minimum principal strain in the element size M, represented by a first coefficient k1 and a second coefficient k2 as

[Mathematical expression 1]

$$\varepsilon_1 = k1 \cdot M^{-k2}$$

$$\varepsilon_2 = \rho \, \varepsilon_1$$

where the first coefficient k1 is represented by tensile strength TS of material of the steel sheet and coefficients $\gamma$ and $\delta$ as

[Mathematical expression 2]

$$k1 = \gamma \, TS + \delta$$

, and
the second coefficient k2 is represented by maximum principal strain $\varepsilon_{1B}$ in the reference element size and a coefficient $\eta$ as

[Mathematical expression 3]

$$k2 = -\ln(\varepsilon_{1B} / (\gamma \, TS + \delta)) / \eta = -\ln(\varepsilon_{1B} / k1) / \eta$$

(11) The fracture determination device according to any one of (1) to (10), wherein
the fracture determination unit determines that an element will fracture when the determined maximum principal strain and minimum principal strain of the element exceed a threshold value given by the target forming limit line.
(12) The fracture determination device according to any one of (1) to (10), further including:

    a target forming limit stress generation unit which generates target forming limit stress by changing the target forming limit value; and
    a strain-stress conversion unit which converts the determined maximum principal strain and minimum principal strain of each element into maximum principal stress and minimum principal stress, wherein
    the fracture determination unit determines that an element will fracture when the converted maximum principal stress and minimum principal stress of the element exceed the target forming limit stress.

(13) The fracture determination device according to any one of (1) to (12), wherein
the deformation analysis is a crash analysis of a vehicle formed by the steel material.
(14) A fracture determination method including:

    generating a reference forming limit value in accordance with material property and sheet thickness of a steel material included in element input information indicating an element size in an analysis model used in a deformation analysis of the steel material by a finite element method on the basis of reference forming limit value information indicating the reference forming limit value corresponding to a forming limit line in a reference element size indicating an element size used as a reference;
    using the element size and tensile strength of the steel material to change the reference forming limit value, predict a forming limit value in the element size, and generate a target forming limit value;
    running the deformation analysis by using the input information and outputting deformation information including strain of each element;
    determining maximum principal strain and minimum principal strain of each element included in the deformation information; and

determining whether each element in the analysis model will fracture on the basis of maximum principal strain and minimum principal strain of each element for which the principal strain is determined and a target forming limit line specified by the target forming limit value.

(15) A fracture determination program for causing a computer to perform processing to:

generate a reference forming limit value in accordance with material property and sheet thickness of a steel material included in element input information indicating an element size in an analysis model used in a deformation analysis of the steel material by a finite element method on the basis of reference forming limit value information indicating the reference forming limit value corresponding to a forming limit line in a reference element size indicating an element size used as a reference;
use the element size and tensile strength of the steel material to change the reference forming limit value, predict a forming limit value in the element size, and generate a target forming limit value;
run the deformation analysis by using the input information and output deformation information including strain of each element;
determine maximum principal strain and minimum principal strain of each element included in the deformation information; and
determine whether each element in the analysis model will fracture on the basis of maximum principal strain and minimum principal strain of each element for which the principal strain is determined and a target forming limit line specified by the target forming limit value.

[ADVANTAGEOUS EFFECTS OF INVENTION]

In one embodiment, fracture of an ultra-high strength steel material whose tensile strength is 980 MPa or more may be appropriately predicted.

BRIEF DESCRIPTION OF DRAWINGS

FIG. 1 is a diagram showing a relationship between forming limit lines generated by using a forming limit value prediction expression and actually measured values.
FIG. 2 is a diagram showing a fracture determination device according to a first embodiment.
FIG. 3 is a flowchart of fracture determination processing by the fracture determination device according to the first embodiment.
FIG. 4 is a diagram showing a fracture determination device according to a second embodiment.
FIG. 5 is a flowchart of fracture determination processing by the fracture determination device according to the second embodiment.
FIG. 6 is a diagram showing a mold manufacturing system, which is an example of an application example of the fracture determination device according to an embodiment.
FIG. 7 is a diagram showing a relationship between a load and strain between sample points in analysis results of a tensile test by a fracture determination device according to a comparative example.
FIG. 8A to FIG. 8C are diagrams showing displacement in analysis results of a tensile test by the fracture determination device according to the first embodiment, and FIG. 8A shows displacement when an element size is 2 [mm], FIG. 8B shows displacement when an element size is 3 [mm], and FIG. 8C shows displacement when an element size is 5 [mm].
FIG. 9 is a diagram showing a relationship between a load and strain between sample points in the analysis results of a tensile test by the fracture determination device according to the first embodiment.

DESCRIPTION OF EMBODIMENTS

In the following, with reference to the drawings, a fracture determination device, a fracture determination program, and a method thereof are explained. However, the technical scope of the present invention is not limited to those embodiments.

(Outline of fracture determination device according to embodiment)

The fracture determination device according to an embodiment changes reference forming limit value information created by actual measurement or the like and a reference forming limit value in a reference element size, which is determined by material property and sheet thickness included in element input information by a finite element method by a forming limit value prediction expression, which is a function of an element size, the size of an element in an analysis model, and tensile strength of a steel material. the fracture determination device according to the embodiment may use a target forming limit value in accordance with the tensile strength by using the target forming limit value changed by the forming limit value prediction expression, which is a function of the element size, which is the size of an element in the analysis model, and the tensile strength of a steel material. the fracture determination device according to the embodiment may use a target forming limit value in accordance with the tensile strength, and therefore fracture of an ultra-high strength steel material whose tensile strength is 980 MPa or more may be predicted. In the following, before the fracture determination device according to the embodiment is explained, the principle of fracture determination processing in the fracture determination device according to the embodiment is explained.

The inventors of the present invention have found a forming limit value prediction expression to predict a reference forming limit value in the reference element size, which is determined by the reference forming limit value corresponding to the forming limit line created by actual measurement or the like and material property and sheet thickness of a determination-target steep sheet, and maximum principal strain in the element size on the basis of a relationship between the element size in the analysis model of the determination-target steel sheet and the maximum principal strain in the reference element size. In other words, the inventors of the present invention have found that the presence/absence of fracture is determined by using a target forming limit value generated by changing the reference forming limit value corresponding to the reference forming limit line, which is used as a reference, by the forming limit value prediction expression, which is a function of the tensile strength of a steel material and the element size. By changing the forming limit value by using the forming limit value prediction expression in accordance with the element size, fracture in accordance with the element size may be determined.

Expression (1) shown below is the forming limit value prediction expression found by the inventors of the present invention.

[Mathematical expression 4]

$$\varepsilon_1 = k1 \cdot M^{-k2}$$

$$\varepsilon_2 = \rho \varepsilon_1 \qquad (1)$$

Here, $\rho$ is the strain ratio, M is the element size [mm] indicating the size of the target element in the analysis by the FEM, $\varepsilon_1$ is the maximum principal strain in the element size M, and $\varepsilon_2$ is the minimum principal strain in the element size M. Then, k1, which is the multiplicand of the element size M, is the first coefficient and k2, which is the exponent of the element size M, is the second coefficient depending on the maximum principal strain in the reference element size, to be explained with reference to expression (2) and expression (4) shown below. Expression (1) is an expression which predicts the maximum principal strain $\varepsilon_1$ in the element size M on the basis of the relationship between the element size M and the maximum principal strain in the reference element size. In expression (1), it is indicated that the maximum principal strain $\varepsilon_1$ in the element size M is generated by multiplying the first coefficient k1 and the arithmetic operation result obtained by the power arithmetic operation in which the second coefficient k2 is taken as the exponent and the element size M is taken as the base.

Expression (2) shown below is an expression showing expression (1) in more detail.

[Mathematical expression 5]

$$\varepsilon_1 = (\gamma TS + \delta) \cdot M^{(\ln(\varepsilon_{1B}/(\gamma TS + \delta))/\eta)}$$

$$\varepsilon_2 = \rho \varepsilon_1 \qquad (2)$$

Here, TS indicates the tensile strength [MPa] of a material, such as a steel sheet, $\varepsilon_{1B}$ indicates the maximum principal strain in the reference element size, and $\gamma$, $\delta$, and $\eta$ each indicate a coefficient. Here, $\gamma$ is a negative value and $\delta$ is a positive value. The coefficients $\gamma$ and $\delta$ change in accordance with the strain ratio $\rho$. The coefficient $\eta$ is determined by the reference element size. From expressions (1) and (2), the first coefficient k1 is represented as follows.

[Mathematical expression 6]

$$k1 = \gamma TS + \delta \qquad (3)$$

In expression (3), the first coefficient k1 is in proportion to the tensile strength TS when the strain ratio $\rho$ is constant, in other words, it is indicated that the first coefficient k1 is a function of the strain ratio $\rho$ and the tensile strength of a steel material. Expression (3) represents that the first coefficient k1 is in proportion to the tensile strength TS of a steel material and represents that as the tensile strength TS of a steel material increases, the maximum principal strain $\varepsilon_1$ and the minimum principal strain $\varepsilon_2$ increase. The first coefficient k1 is a positive value, $\gamma$ is a negative value, and $\delta$ is a positive value, and therefore as the tensile strength TS of a steel material increases the first coefficient k1 decreases. Further, from expressions (1) and (2), the second coefficient k2 is represented as follows.

[Mathematical expression 7]

$$k2 = -\ln(\varepsilon_{1B}/(\gamma TS + \delta))/\eta = -\ln(\varepsilon_{1B}/k1)/\eta \qquad (4)$$

In expression (4), it is indicated that the second coefficient k2 is a function of the maximum principal strain $\varepsilon_{1B}$ in the reference element size and the first coefficient k1. In more detail, in expression (4), it is indicated that the second coefficient k2 is in proportion to the maximum principal strain $\varepsilon_{1B}$ in the reference size and the logarithm of the function of the first coefficient k1. In still more detail, in expression (4), it is indicated that the second coefficient k2 is in proportion to the logarithm of a value obtained by dividing the maximum principal strain $\varepsilon_{1B}$ in the reference element by the first coefficient k1.

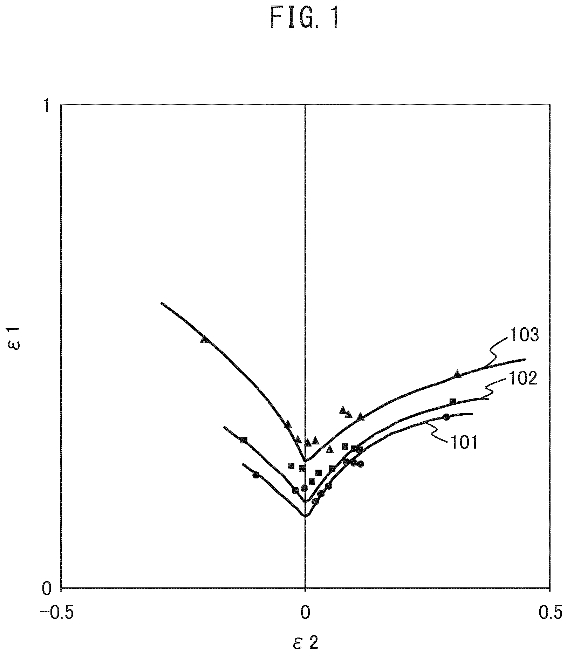

FIG. 1 is a diagram showing a relationship between forming limit lines generated by using target forming limit values changed by the forming limit value prediction expression explained with reference to expressions (1) to (4) and actually measured values. In FIG. 1, the horizontal axis represents the minimum principal strain $\varepsilon_2$ and the vertical axis represents the maximum principal strain $\varepsilon_1$. A circle mark indicates an actually measured value when the gauge length is 10 [mm], a rectangle mark indicates an actually measured value when the gauge length is 6 [mm], and a triangle mark indicates an actually measured value when the gauge length is 2 [mm]. A curve 101 is a reference forming limit line created by using reference forming limit value information generated from actually measured data when the gauge length is 10 [mm] and a reference forming limit value calculated from material property and sheet thickness. Curves 102 and 103 indicate target reference forming limit lines generated by using target forming limit values changed form the reference forming limit values indicated by the curve 101 by the forming limit value prediction expression explained with reference to expressions (1) to (4). The curve 102 indicates the forming limit line when the gauge length is 6 [mm] and the curve 103 indicates the forming limit line when the gauge length is 2 [mm]. The tensile strength as the material property of the steel sheet, which was used for actual measurement and generation of the forming limit lines shown in FIG. 1, is 1,180 [MPa] and the sheet thickness is 1.6 [mm]. In general, in the vicinity of the fracture portion, the strain is localized, and therefore higher strain occurs at a portion nearer to the fracture portion. Thus, the shorter the length of the gauge which reads the strain at the fracture portion, the higher strain which occurs in the vicinity of the fracture portion is read, and therefore the value of the forming limit value becomes high. In other words, in FIG. 1, the forming limit line is located at a higher portion. Further, when this is compared with a steel material of other material property, in general, the ductility of the steel material decreases as the tensile strength TS of the steel material increases, and therefore the value of the strain in the vicinity of the fracture portion becomes small. Thus, the forming limit curve in FIG. 1 is located at a lower portion.

As shown in FIG. 1, the target forming limit line changed from the reference forming limit line by using the reference forming limit value well coincides with the actually measured values with a high accuracy when the gauge length is 2 [mm] and the gauge length is 6 [mm], and therefore it is indicated that the forming limit value prediction expression according to the present invention has a high accuracy.

(Configuration and function of fracture determination device according to first embodiment)

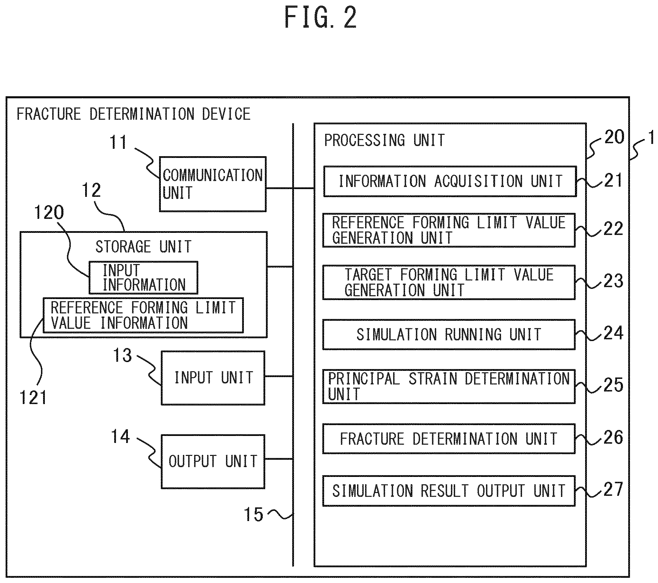

FIG. 2 is a diagram showing a fracture determination device according to a first embodiment.

A fracture determination device 1 has a communication unit 11, a storage unit 12, an input unit 13, an output unit 14, and a processing unit 20. The communication unit 11, the storage unit 12, the input unit 13, the output unit 14, and the processing unit 20 are connected with one another via a bus 15. The fracture determination device 1 runs a crash analysis of a vehicle, such as an automobile, by the FEM as well as generating a target forming limit value indicating a forming limit value in an element size by changing a reference forming limit value by the forming limit value prediction expression using tensile strength of a steel material. The fracture determination device 1 determines whether each element will fracture from the maximum principal strain and the minimum principal strain of each element output by the crash analysis on the basis of the generated target forming limit value. In one example, the fracture determination device 1 is a personal computer capable of running an analysis by the FEM.

The communication unit 11 has a wired communication interface circuit, such as Ethernet (registered trademark). The communication unit 11 performs communication with a server and the like, not shown schematically, via a LAN.

The storage unit 12 includes at least one of, for example, a semiconductor storage device, a magnetic tape device, a magnetic disc device, and an optical disc device. The storage unit 12 stores an operating system program, driver programs, application programs, data, and so on, which are used for processing in the processing unit 20. For example, the storage unit 12 stores, as an application program, a fracture determination processing program for performing fracture determination processing to determine fracture of each element. Further, the storage unit 12 stores, as an application program, a crash analysis program for running a crash analysis using the FEM. The fracture determination processing program, the crash analysis program, and so on may be installed in the storage unit 12 by using a publicly known setup program or the like from a computer readable portable storage medium, for example, such as a CD-ROM and a DVD-ROM.

Further, the storage unit 12 stores various kinds of data used for the fracture determination processing and the crash analysis. For example, the storage unit 12 stores input information 120, reference forming limit value information 121, and so on used for the fracture determination processing and the crash analysis.

The input information 120 includes material property and sheet thickness of a steel material and the element size indicating the size of an element in the crash analysis by the finite element method. The material property of a steel material include a stress-strain (S-S) curve, each coefficient in the Swift formula used for fitting of the S-S curve, Young's modulus, Poisson's ratio, density, and so on. The reference forming limit value information 121 is used when specifying the reference forming limit value indicating the forming limit value corresponding to the forming limit line in the reference element size indicating the element size, which is used as a reference, for each of material property and sheet thickness. In one example, the reference forming limit value information 121 includes the reference forming limit value corresponding to the reference forming limit line actually measured for each of material property and sheet thickness. Further, in another example, the reference forming limit value information 121 includes the reference forming limit value corresponding to the reference forming limit line corrected so that the forming limit line obtained from the Storen-Rice theoretical formula coincides with the actually measured reference forming limit line.

Further, the storage unit 12 stores the input data of the crash analysis by the FEM. Furthermore, the storage unit 12 may temporarily store temporary data relating to predetermined processing.

The input unit 13 may be any device to input data and is, for example, a touch panel, a keyboard, and so on. An operator may input a character, a figure, a symbol, and so on by using the input unit 13. When operated by an operator, the input unit 13 generates a signal corresponding to the operation. Then, the generated signal is supplied to the processing unit 20 as instructions of the operator.

The output device 14 may be any device to display a video, an image, and so on and is, for example, a liquid crystal display, an organic EL (Electro-Luminescence) display, and so on. The output unit 14 displays a video in accordance with video data, an image in accordance with image data, and so on, supplied from the processing unit 20. Further, the output unit 14 may be an output device which prints a video, an image, a character, or the like on a display medium, such as paper.

The processing unit 20 has one or a plurality of processors and peripheral circuits thereof. The processing unit 20 centralizedly controls the entire operation of the fracture determination device 1 and for example, is a CPU. The processing unit 20 performs processing on the basis of the programs (driver program, operating system program, application program, and so on) stored in the storage unit 12. Further, the processing unit 20 may execute a plurality of programs (application programs and the like) in parallel.

The processing unit 20 has an information acquisition unit 21, a reference forming limit value generation unit 22, a target forming limit value generation unit 23, an analysis running unit 24, a principal strain determination unit 25, a fracture determination unit 26, and an analysis result output unit 27. Each of these units is a function module implemented by a program executed by the processor included in the processing unit 20. Alternatively, each of these units may be implemented in the fracture determination device 1 as firmware.

(Fracture determination processing by fracture determination device according to first embodiment)

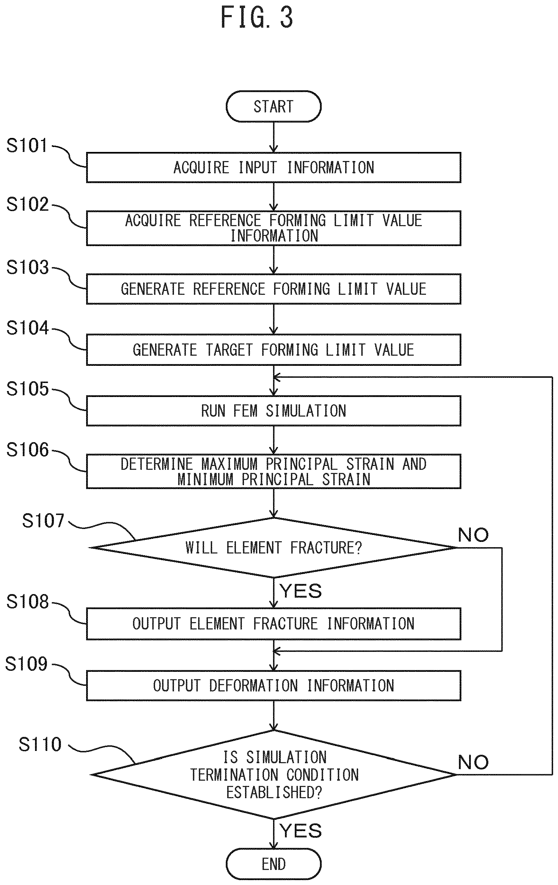

FIG. 3 is a flowchart of fracture determination processing for the fracture determination device 1 to determine whether each element for which the crash analysis has been run will fracture. The fracture determination processing shown in FIG. 3 is performed mainly by the processing unit 20 in cooperation with each element of the fracture determination device 1 on the basis of the program stored in advance in the storage unit 12.

First, the information acquisition unit 21 acquires the reference forming limit value information 121 from the storage unit 12 (S102) as well as acquiring the input information including the material property, such as the tensile strength, the sheet thickness, and the element size from the storage unit 12 (S101).

Next, the reference forming limit value generation unit 22 generates a reference forming limit value corresponding to the material property and the sheet thickness acquired by the processing at S101 on the basis of the reference forming limit value information 121 acquired by the processing at S102 (S103). Specifically, for example, the reference forming limit value generation unit 22 generates a reference forming limit value corresponding to the material property and sheet thickness by selecting one group of reference forming limit values from a plurality of groups of reference forming limit values stored in the storage unit 12 on the basis of a combination of the material property and sheet thickness included in the input information 120. The reference forming limit value of the plurality of groups included in the reference forming limit value information 121 is an actually measured value. Further, for example, the reference forming limit value generation unit 22 generates a reference forming limit value corresponding to the material property and sheet thickness by correcting the one group of reference forming limit values stored in the storage unit 12 by actually measured values in accordance with the material property and sheet thickness. The reference forming limit value generation unit 22 first generates a forming limit value from the Storen-Rice theoretical formula. Next, the reference forming limit value generation unit 22 generates a reference forming limit value corresponding to the material property and sheet thickness by shifting the forming limit value generated from the Storen-Rice theoretical formula in accordance with the actually measured value on the basis of the actually measured value stored in the storage unit 12 as the shift amount in accordance with the material property and sheet thickness.

Next, the target forming limit value generation unit 23 generates a target forming limit value indicating the forming limit value in the element size acquired by the processing at S101 by changing the reference forming limit value generated by the processing at S 103 by the forming limit value prediction expression represented in expressions (1) to (4) (S104).

Next, the analysis running unit 24 runs the crash analysis of a vehicle, such as an automobile, formed by the steel material by the FEM by using mesh data stored in the storage unit 12 on the basis of the input information acquired by the processing at S101 (S 105). The analysis running unit 24 sequentially outputs deformation information including the displacement of a contact point, the strain of the element, and the stress of the element for each element as results of running the analysis.

Next, the principal strain determination unit 25 determines the maximum principal strain $\varepsilon_1$ and the minimum principal strain $\varepsilon_2$ of each element included in the deformation information output by the processing at S105 (S106).

Next, the fracture determination unit 26 determines whether each element will fracture on the basis of the maximum principal strain $\varepsilon_1$ and the minimum principal strain $\varepsilon_2$ of each element determined by the processing at S106 and the target forming limit line specified by the target forming limit value generated by the processing at S103 (S107). The fracture determination unit 26 determines that the element will not fracture when the plot point determined by the maximum principal strain $\varepsilon_1$ and the minimum principal strain $\varepsilon_2$ does not exceed a threshold value given by the target forming limit line and determines that the element will fracture when the plot point determined by the maximum principal strain $\varepsilon_1$ and the minimum principal strain $\varepsilon_2$ exceeds the threshold value given by the target forming limit line. In one example, the target forming limit line is obtained by arithmetic operation as an approximation expression of the target forming limit value.

Next, it is determined that the element will fracture (S107 - YES), the fracture determination unit 26 outputs element fracture information indicating that the element will fracture to the analysis running unit 24 (S108). The analysis running unit 24 may erase the element determined to fracture, in other words, may delete the element from the crash analysis data.

Next, the analysis result output unit 27 outputs the deformation information sequentially output by the analysis running unit 24 (S109). Next, the analysis running unit 24 determines whether a predetermined analysis termination condition is established (S I 10). The analysis termination time is acquired from the input data. Until it is determined that the analysis termination condition is established, the processing is repeated.

(Working and effect of fracture determination device according to first embodiment)

The fracture determination device 1 determines whether fracture will occur by using the target forming limit value changed in accordance with the element size by the forming limit value prediction expression using tensile strength of a steel material, and therefore accurate fracture prediction may be performed in accordance with tensile strength of a steel material without depending on the element size.

Accurate fracture prediction may be performed by the fracture determination device 1, and therefore the number of times of the collision test with an actual automobile member may be significantly reduced. Further, the collision test with an actual automobile member may be omitted.

Further, by performing accurate fracture prediction by the fracture determination device 1, a member that prevents fracture at the time of collision may be designed on a computer, and therefore this contributes to a significant reduction in the cost and a reduction in development period of time.

(Configuration and function of fracture determination device according to second embodiment)

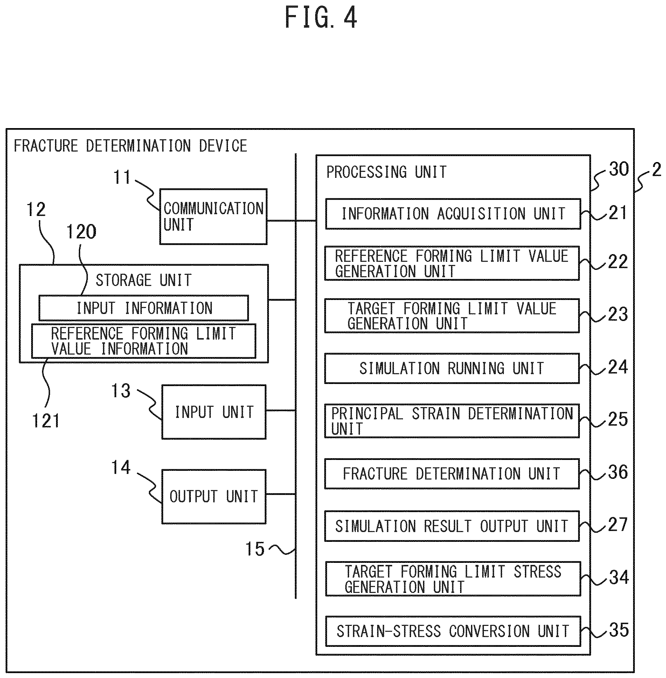

FIG. 4 is a diagram showing a fracture determination device according to a second embodiment.

A fracture determination device 2 differs from the fracture determination device 1 according to the first embodiment in that a processing unit 30 is arranged in place of the processing 20. The processing unit 30 differs from the processing unit 20 in having a target forming limit stress generation unit 34 and a strain-stress conversion unit 35 and in that a fracture determination unit 36 is arranged in place of the fracture determination unit 26. The configuration and function of the components of the fracture determination device 2 except for the target forming limit stress generation unit 34, the strain-stress conversion unit 35, and the fracture determination unit 36 are the same as the configuration and function of the components of the fracture determination device 1, to which the same symbols are attached, and therefore detailed explanation is omitted here.

(Fracture determination processing by fracture determination device according to second embodiment)

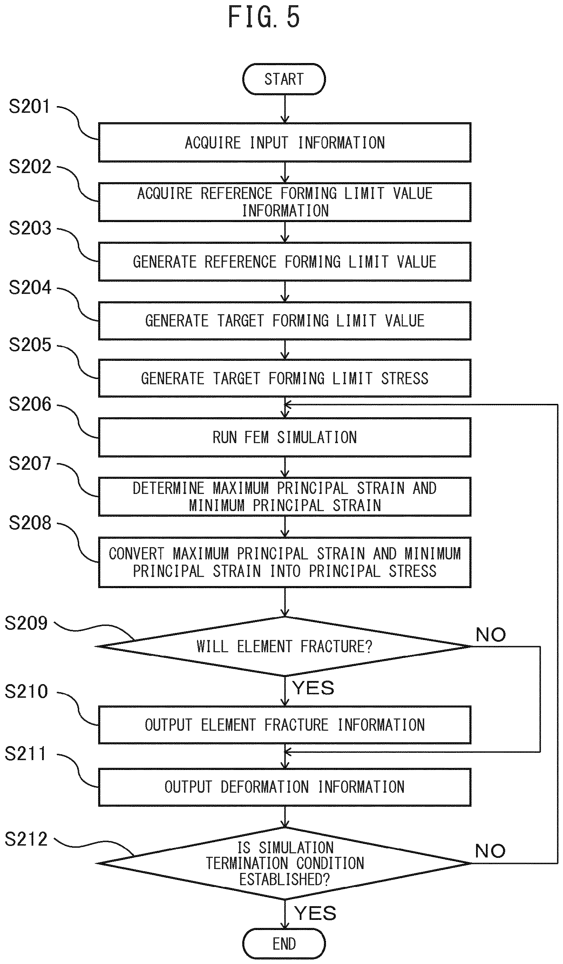

FIG. 5 is a flowchart of fracture determination processing for the fracture determination device 2 to determine whether each element for which the crash analysis has been run will fracture. The fracture determination processing shown in FIG. 5 is performed mainly by the processing unit 30 in cooperation with each element of the fracture determination device 2 on the basis of the program stored in advance in the storage unit 12.

Processing at S201 to S204 is the same as the processing at S101 to S104, and therefore detailed explanation is omitted here. The target forming limit stress generation unit 34 generates target forming limit stress by changing the reference forming limit value generated by the processing at S204 (S205).

Next, on the basis of the input information, the analysis running unit 24 runs the crash analysis by the FEM when a predetermines collision occurs by using the mesh data stored in the storage unit 12 (S206). Next, the principal strain determination unit 25 determines the maximum principal strain $\varepsilon_1$ and the minimum principal strain $\varepsilon_2$ of each element included in the deformation information output by the processing at S205 (S207).

Next, the strain-stress conversion unit 35 converts the determined maximum principal strain $\varepsilon_1$ and the minimum principal strain $\varepsilon_2$ of each element output by the processing at S207 into maximum principal stress and minimum principal stress (S208).

Next, the fracture determination unit 36 determines whether each element will fracture on the basis of the maximum principal stress and the minimum principal stress of each element converted by the processing at S208 and the target forming limit stress generated by the processing at S205 (S209). The fracture determination unit 36 determines that the element will not fracture when the maximum principal stress and the minimum principal stress do not exceed the target forming limit stress and determines that the element will fracture when the maximum principal stress and the minimum principal stress exceed the target forming limit stress. Processing at S210 to S212 is the same as the processing at S108 to S110, and therefore detailed explanation is omitted here.

(Modification example of fracture determination device according to embodiments)

The fracture determination devices 1 and 2 perform the fracture determination processing in the crash analysis of a vehicle, but a fracture determination device according to the embodiment may perform the fracture determination processing in another analysis, such as a deformation analysis at the time of press molding of a steel sheet. Further, in the explained example, explanation is given by taking the case where the element size of the analysis model is uniform as an example, but the fracture determination device according to the embodiment may use an analysis model whose element sizes are different for different regions. In other words, the element model used by the fracture determination device according to the embodiment may be one including a plurality of element sizes.

(Application example of fracture determination device according to embodiment)

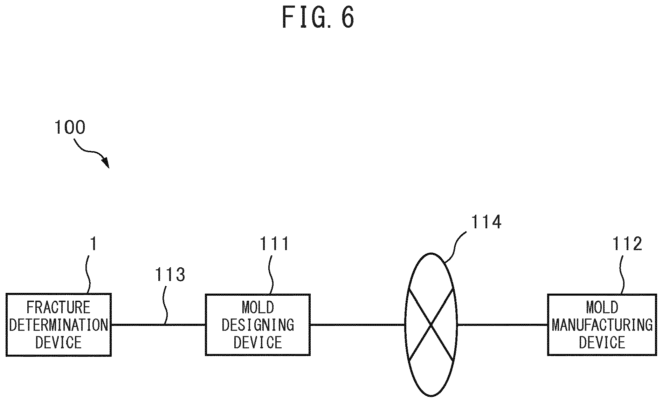

FIG. 6 is a diagram showing a mold manufacturing system, which is an example of the application example of the fracture determination device according to the embodiment.

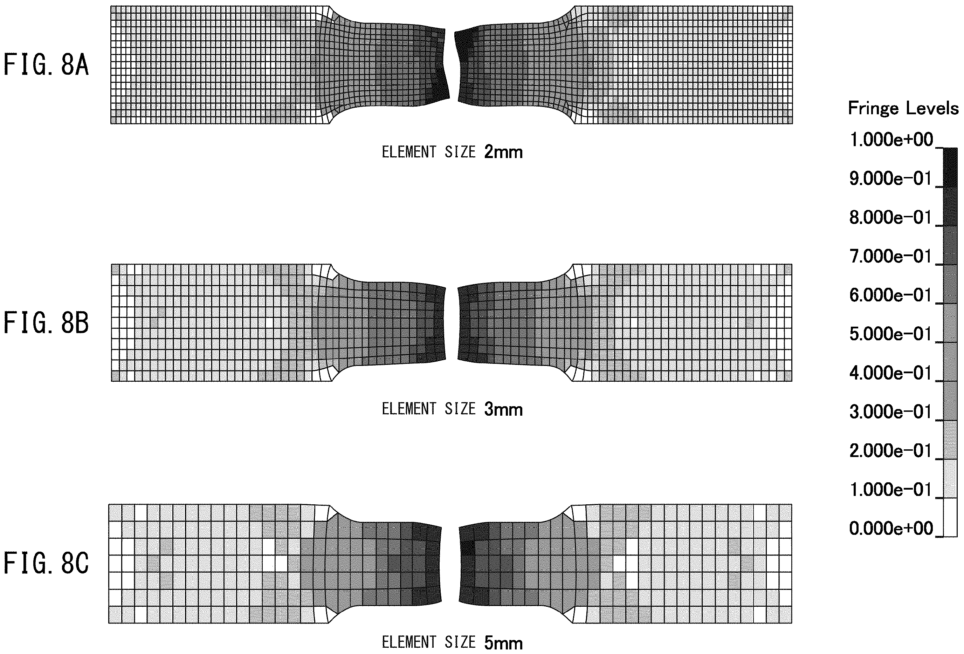

A mold manufacturing system 100 has the fracture determination device 1, a mold designing device 111, and a mold manufacturing device 112. The mold designing device 111 is a device which designs a mold for manufacturing, for example, the body of an automobile and is a computer connected with the fracture determination device 1 via a LAN 113. The mold designing device 111 generates mold data representing a desired mold by using fracture determination by the fracture determination device 1. In FIG. 8, the mold designing device 111 is arranged as a device separate from the fracture determination device 1, but in another example, the mold designing device 111 may be integrated with the fracture determination device 1.

The mold manufacturing device 112 has mold manufacturing facilities, such as an electric discharge machine, a milling machine, and a polishing machine, not shown schematically, and is connected to the mold designing device 111 via a communication network 114, which is a wide-area communication network, by a switching machine, not shown schematically. The mold manufacturing device 112 manufactures a mold corresponding to the mold data on the basis of the mold data transmitted from the mold designing device 111.

EXAMPLES

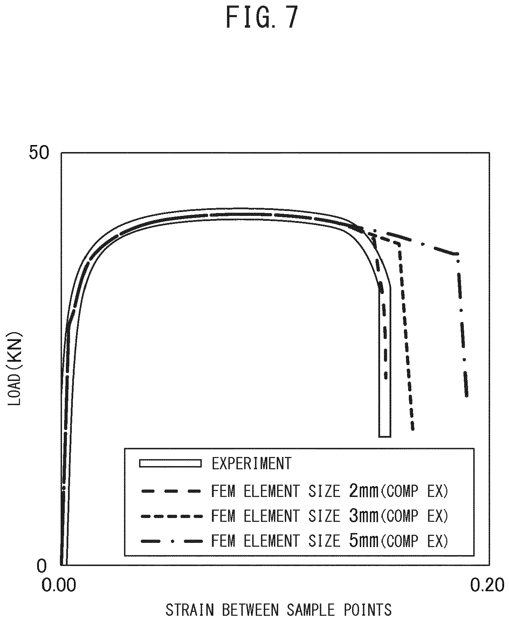

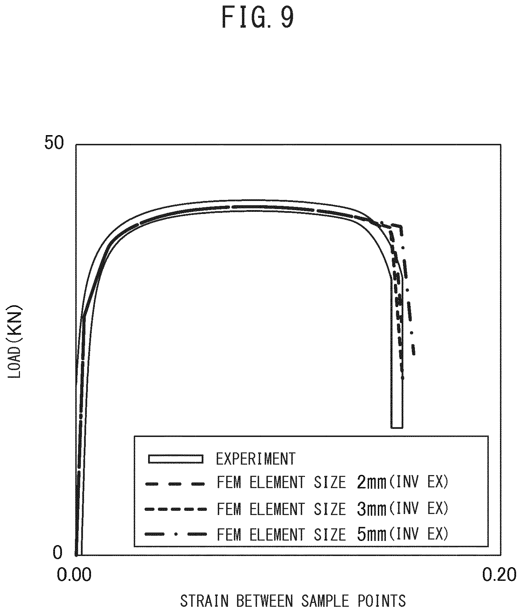

FIG. 7 is a diagram showing a relationship between a load and strain between sample points in analysis results of a tensile test by a fracture determination device according to comparative examples. FIG. 8A to FIG. 8C are diagrams each showing a degree of risk in analysis results of a tensile test by the fracture determination device 1, which are examples of the present invention, and a state where the element determined to fracture, in other words, the element whose degree of risk of fracture exceeds 1 is deleted and the test chip is divided. FIG. 8A shows a case where an element size is 2 [mm], FIG. 8B shows a case where an element size is 3 [mm], and FIG. 8C shows a case where when an element size is 5 [mm]. FIG. 9 is a diagram showing a relationship between a load and strain between sample points in the analysis results of the tensile test by the fracture determination device 1, which are examples of the present invention. In FIG. 7 and FIG. 9, the horizontal axis represents the strain between sample points and the vertical axis represents the load [kN].

The fracture determination device according to the comparative examples ran an analysis of a tensile test for a steel sheet whose sheet thickness is 1.6 [mm] and whose degree of tensile strength is 980 MPa. Further, the fracture determination device according to the comparative examples performed an analysis in advance by using an FEM model whose element size is 2 [mm] and checked fracture and performed fracture determination processing for a model whose element size is 3 [mm] and a model whose element size is 5 [mm] by using the checked fracture strain by setting the same criteria.

Of course, the analysis results of the tensile test by the fracture determination device according to the comparative examples well coincide with the results of the experiment for the model whose element size is 2 [mm], for which the fracture strain has been checked in advance, but in a case of the model whose element size is 3 [mm] and the model whose element size is 5 [mm], the fracture timing differs for different element sizes and as the element size increases, the results are such that the timing at which fracture is determined is delayed more. Thus, when element sizes are different, experimental results are not correctly predicted.

On the other hand, in the analysis results of the tensile test by the fracture determination device 1, fracture is determined at approximately the same timing irrespective of the element size. Further, in the analysis results of the tensile test by the fracture determination device 1, the experiment results are also determined with a high accuracy.

## Claims

1. A fracture determination device including:

   a storage unit which stores element input information indicating material property and sheet thickness of a steel material and an element size in an analysis model used for a deformation analysis of the steel material by a finite element method, and reference forming limit value information indicating a reference forming limit value indicating a forming limit value in a reference element size, which is the element size used as a reference;
   a reference forming limit value generation unit which generates the reference forming limit value in accordance with the material property and the sheet thickness included in the input information on the basis of the reference forming limit value information;
   a target forming limit value generation unit which uses tensile strength of the steel material to change the reference forming limit value, predict a forming limit value in the element size, and generate a target forming limit value;
   an analysis running unit which runs the deformation analysis by using the input information and outputs deformation information including strain of each element;
   a principal strain determination unit which determines principal strain of each element included in the deformation information; and
   a fracture determination unit which determines whether each element in the analysis model will fracture on the basis of maximum principal strain and minimum principal strain of each element for which the principal strain is determined and a target forming limit line specified by the target forming limit value.

2. The fracture determination device according to claim 1, wherein
   the target forming limit value generation unit predicts the forming limit value by using the element size and a first coefficient obtained from tensile strength of the steel material.

3. The fracture determination device according to claim 2, wherein
the target forming limit value generation unit predicts maximum principal strain in the element size by using the first coefficient, a second coefficient including maximum principal strain in the reference element size and the first coefficient, and the element size.

4. The fracture determination device according to claim 3, wherein
the second coefficient is a function of maximum principal strain in the reference element size and the first coefficient.

5. The fracture determination device according to claim 4, wherein
the second coefficient is in proportion to a logarithm of a value obtained by dividing maximum principal strain in the reference element size by the first coefficient.

6. The fracture determination device according to any one of claims 2 to 5, wherein
the target forming limit value generation unit predicts maximum principal strain in the element size by using a product of the first coefficient and an arithmetic operation result of power arithmetic operation in which the second coefficient is taken to be an exponent and the element size is taken to be a base.

7. The fracture determination device according to claim 1, wherein
the target forming limit value generation unit predicts the forming limit value by using the element size and a second coefficient obtained from tensile strength of the steel material.

8. The fracture determination device according to claim 7, wherein
the second coefficient is a function of maximum principal strain in the reference element size and the first coefficient.

9. The fracture determination device according to claim 8, wherein
the second coefficient is in proportion to a logarithm of a value obtained by dividing maximum principal strain in the reference element size by the fist coefficient.

10. The fracture determination device according to claim 1, wherein

the target forming limit value generation unit generates the target forming limit value by using a forming limit value prediction expression, which is a function of the element size and tensile strength of the steel material, the forming limit value prediction expression is, in a case where $\rho$ is a strain ratio, M is an element size indicating a size of an element in an analysis model used in an analysis by the FEM, $\varepsilon_1$ is maximum principal strain in an element size M, and $\varepsilon_2$ is minimum principal strain in the element size M, represented by a first coefficient k1 and a second coefficient k2 as

[Mathematical expression 1]

$$\varepsilon_1 = k1 \cdot M^{-k2}$$

$$\varepsilon_2 = \rho\, \varepsilon_1$$

where the first coefficient k1 is represented by tensile strength TS of material of the steel sheet and coefficients $\gamma$ and $\delta$ as

[Mathematical expression 2]

$$k1 = \gamma\, TS + \delta$$

, and
the second coefficient k2 is represented by maximum principal strain $\varepsilon_{1B}$ in the reference element size and a

coefficient η as

[Mathematical expression 3]

$$k2 = -\ln(\varepsilon_{1B}/(\gamma TS + \delta))/\eta = -\ln(\varepsilon_{1B}/k1)/\eta$$

**11.** The fracture determination device according to any one of claims 1 to 10, wherein
the fracture determination unit determines that an element will fracture when the determined maximum principal strain and minimum principal strain of the element exceed a threshold value given by the target forming limit line.

**12.** The fracture determination device according to any one of claims 1 to 10, further including:

a target forming limit stress generation unit which generates target forming limit stress by changing the target forming limit value; and
a strain-stress conversion unit which converts the determined maximum principal strain and minimum principal strain of each element into maximum principal stress and minimum principal stress, wherein
the fracture determination unit determines that an element will fracture when the converted maximum principal stress and minimum principal stress of the element exceed the target forming limit stress.

**13.** The fracture determination device according to any one of claims 1 to 12, wherein
the deformation analysis is a crash analysis of a vehicle formed by the steel material.

**14.** A fracture determination method including:

generating a reference forming limit value in accordance with material property and sheet thickness of a steel material included in element input information indicating an element size in an analysis model used in a deformation analysis of the steel material by a finite element method on the basis of reference forming limit value information indicating the reference forming limit value corresponding to a forming limit line in a reference element size indicating an element size used as a reference;
using the element size and tensile strength of the steel material to change the reference forming limit value, predict a forming limit value in the element size, and generate a target forming limit value;
running the deformation analysis by using the input information and outputting deformation information including strain of each element;
determining maximum principal strain and minimum principal strain of each element included in the deformation information; and
determining whether each element in the analysis model will fracture on the basis of maximum principal strain and minimum principal strain of each element for which the principal strain is determined and a target forming limit line specified by the target forming limit value.

**15.** A fracture determination program for causing a computer to perform processing to:

generate a reference forming limit value in accordance with material property and sheet thickness of a steel material included in element input information indicating an element size in an analysis model used in a deformation analysis of the steel material by a finite element method on the basis of reference forming limit value information indicating the reference forming limit value corresponding to a forming limit line in a reference element size indicating an element size used as a reference;
use the element size and tensile strength of the steel material to change the reference forming limit value, predict a forming limit value in the element size, and generate a target forming limit value;
run the deformation analysis by using the input information and output deformation information including strain of each element;
determine maximum principal strain and minimum principal strain of each element included in the deformation information; and
determine whether each element in the analysis model will fracture on the basis of maximum principal strain and minimum principal strain of each element for which the principal strain is determined and a target forming limit line specified by the target forming limit value.

FIG. 1

# FIG. 2

FRACTURE DETERMINATION DEVICE

11 — COMMUNICATION UNIT

12 — STORAGE UNIT

120 — INPUT INFORMATION

121 — REFERENCE FORMING LIMIT VALUE INFORMATION

13 — INPUT UNIT

14 — OUTPUT UNIT

15

PROCESSING UNIT — 20 — 1

INFORMATION ACQUISITION UNIT — 21

REFERENCE FORMING LIMIT VALUE GENERATION UNIT — 22

TARGET FORMING LIMIT VALUE GENERATION UNIT — 23

SIMULATION RUNNING UNIT — 24

PRINCIPAL STRAIN DETERMINATION UNIT — 25

FRACTURE DETERMINATION UNIT — 26

SIMULATION RESULT OUTPUT UNIT — 27

EP 3 524 960 A1

# FIG. 3

START

S101 — ACQUIRE INPUT INFORMATION

S102 — ACQUIRE REFERENCE FORMING LIMIT VALUE INFORMATION

S103 — GENERATE REFERENCE FORMING LIMIT VALUE

S104 — GENERATE TARGET FORMING LIMIT VALUE

S105 — RUN FEM SIMULATION

S106 — DETERMINE MAXIMUM PRINCIPAL STRAIN AND MINIMUM PRINCIPAL STRAIN

S107 — WILL ELEMENT FRACTURE? — NO

YES

S108 — OUTPUT ELEMENT FRACTURE INFORMATION

S109 — OUTPUT DEFORMATION INFORMATION

S110 — IS SIMULATION TERMINATION CONDITION ESTABLISHED? — NO

YES

END

16

# FIG. 4

FRACTURE DETERMINATION DEVICE

11 — COMMUNICATION UNIT

12
120

STORAGE UNIT

INPUT INFORMATION

REFERENCE FORMING LIMIT VALUE INFORMATION

121

13 — INPUT UNIT

14 — OUTPUT UNIT

15

PROCESSING UNIT ⌇30 ⌇2

INFORMATION ACQUISITION UNIT ⌇21

REFERENCE FORMING LIMIT VALUE GENERATION UNIT ⌇22

TARGET FORMING LIMIT VALUE GENERATION UNIT ⌇23

SIMULATION RUNNING UNIT ⌇24

PRINCIPAL STRAIN DETERMINATION UNIT ⌇25

FRACTURE DETERMINATION UNIT ⌇36

SIMULATION RESULT OUTPUT UNIT ⌇27

TARGET FORMING LIMIT STRESS GENERATION UNIT ⌇34

STRAIN-STRESS CONVERSION UNIT ⌇35

# FIG. 5

START

S201 — ACQUIRE INPUT INFORMATION

S202 — ACQUIRE REFERENCE FORMING LIMIT VALUE INFORMATION

S203 — GENERATE REFERENCE FORMING LIMIT VALUE

S204 — GENERATE TARGET FORMING LIMIT VALUE

S205 — GENERATE TARGET FORMING LIMIT STRESS

S206 — RUN FEM SIMULATION

S207 — DETERMINE MAXIMUM PRINCIPAL STRAIN AND MINIMUM PRINCIPAL STRAIN

S208 — CONVERT MAXIMUM PRINCIPAL STRAIN AND MINIMUM PRINCIPAL STRAIN INTO PRINCIPAL STRESS

S209 — WILL ELEMENT FRACTURE?  NO

YES

S210 — OUTPUT ELEMENT FRACTURE INFORMATION

S211 — OUTPUT DEFORMATION INFORMATION

S212 — IS SIMULATION TERMINATION CONDITION ESTABLISHED?  NO

YES

END

FIG. 6

100

1

113

111

114

112

FRACTURE
DETERMINATION
DEVICE

MOLD
DESIGNING
DEVICE

MOLD
MANUFACTURING
DEVICE

# FIG. 7

FIG. 8A

ELEMENT SIZE 2mm

FIG. 8B

ELEMENT SIZE 3mm

FIG. 8C

ELEMENT SIZE 5mm

Fringe Levels

1.000e+00

9.000e-01

8.000e-01

7.000e-01

6.000e-01

5.000e-01

4.000e-01

3.000e-01

2.000e-01

1.000e-01

0.000e+00

EP 3 524 960 A1

EP 3 524 960 A1

FIG. 9

22

**INTERNATIONAL SEARCH REPORT**

International application No.

PCT/JP2017/036387

A. CLASSIFICATION OF SUBJECT MATTER
G01N3/00(2006.01)i, G06F17/50(2006.01)i

According to International Patent Classification (IPC) or to both national classification and IPC

B. FIELDS SEARCHED

Minimum documentation searched (classification system followed by classification symbols)
G01N3/00, G06F17/50

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-232714 A (NIPPON STEEL CORP.) 13 September 2007, paragraphs [0023]-[0038] & US 2009/0177417 A1, paragraphs [0060]-[0096] & EP 1985989 A1 & CA 2641174 A & CN 101379381 A & RU 2008135325 A & MX 2008009816 A & RU 2010110951 A & KR 10-1065502 B | 1-15 |
| A | JP 2012-166252 A (JEF STEEL CORP.) 06 September 2012, paragraph [0018] (Family: none) | 1-15 |
| A | JP 2014-16807 A (NIPPON STEEL & SUMITOMO METAL CORP.) 30 January 2014, paragraph [0016] (Family: none) | 1-15 |

☐ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000107818 A
- JP 2009061477 A
- JP 2011147949 A